# EUROPÄISCHE PATENTSCHRIFT

(11) **EP 2 694 885 B1**
(45) Veröffentlichungstag und Bekanntmachung des Hinweises auf die Patenterteilung: **04.07.2018**
(21) Anmeldenummer: 12717594.1
(22) Anmeldetag: 26.03.2012
(51) Int. Cl.: H02S 40/44

(54) **VORRICHTUNG UND VERFAHREN ZUM UMWANDELN VON SOLARER STRAHLUNGSENERGIE IN ELEKTRISCHEN STROM UND/ODER WÄRME**
DEVICE AND METHOD FOR CONVERTING SOLAR RADIATION ENERGY TO ELECTRICAL POWER AND/OR TO HEAT
DISPOSITIF ET PROCÉDÉ DE CONVERSION D'ÉNERGIE SOLAIRE RAYONNANTE EN COURANT ÉLECTRIQUE ET/OU CHALEUR

(30) Priorität: 25.03.2011 DE 202011004424 U
(43) Veröffentlichungstag der Anmeldung: 12.02.2014
(73) Patentinhaber: Reimann, Peter, 41169 Mönchengladbach (DE)
(72) Erfinder: Reimann, Peter, 41169 Mönchengladbach (DE)
(74) Vertreter: Grosse Schumacher Knauer von Hirschhausen
(86) Internationale Anmeldenummer: PCT/EP2012/001313
(87) Internationale Veröffentlichungsnummer: WO 2012/130429

(56) Entgegenhaltungen:
- WO-A1-99/10934
- WO-A1-2006/019091
- WO-A2-2009/046352
- DE-A1-102007 022 164
- US-A1- 2010 288 334
- ZONDAG H A ET AL: "The yield of different combined PV-thermal collector designs", SOLAR ENERGY, PERGAMON PRESS. OXFORD, GB, Bd. 74, Nr. 3, 1. März 2003 (2003-03-01), Seiten 253-269, XP004439145, ISSN: 0038-092X, DOI: 10.1016/S0038-092X(03)00121-X

## Beschreibung

### GEBIET DER ERFINDUNG

Die Erfindung betrifft eine Umwandlungsvorrichtung zur Umwandlung von solarer Strahlungsenergie in elektrischen Strom und/oder in Wärme gemäß dem Oberbegriff des Anspruchs 1.

Die Umwandlungsvorrichtung umfasst demnach ein Photovoltaik-Modul zur photovoltaischen Umwandlung von solarer Strahlungsenergie in elektrischen Strom. Dabei wird von der Sonne emittierte elektromagnetische Strahlung zumindest anteilig von Solarzellen aufgefangen und zumindest teilweise in elektrischen Strom umgewandelt. Ferner umfasst die Umwandlungsvorrichtung ein Solarthermie-Modul zur Absorption von thermischer Energie, welche zumindest teilweise durch solare Energie erzeugt wurde. Bei dem Solarthermie-Modul ist ein beispielsweise als Fluid gebildeter Wärmeträger in zumindest einer Leitung respektive in einem Rohrregister fluidisch führbar. Bei dem Fluid kann es sich um eine Sole handeln. Die von der Sonne durch Einwirkung der Sonnenstrahlung direkt und/oder indirekt erzeugte Wärme und ggf. die bei der Umwandlung der elektromagnetischen Strahlung in elektrischen Strom in dem Photovoltaik-Modul als Verlustwärme erzeugte Wärme werden zumindest teilweise auf die Leitung und den darin geführten Wärmeträger übertragen. Der Wärmeträger wird dabei thermisch angeregt, d. h. die in dem Wärmeträger enthaltene thermische Energie nimmt durch die Einwirkung der solaren Strahlungsenergie zu.

Die Kombination eines Photovoltaik-Moduls mit einem Solarthermie-Modul wird gemeinhin als Hybridkollektor (nachfolgend auch als Kollektor) bezeichnet. In einem Rahmen des Kollektors sind die Module so angeordnet oder anordbar, dass die solare Strahlung auf das Photovoltaik-Modul direkt einwirkt. Bezogen auf die Ausbreitungsrichtung der solaren Strahlung befindet sich das Solarthermie-Modul im Wesentlichen hinter dem Photovoltaik-Modul. Beispielsweise kann das Solarthermie-Modul unter dem Photovoltaik-Modul angeordnet sein, da die Ausbreitungsrichtung der solaren Strahlung im Wesentlichen vertikal verläuft oder zumindest eine vertikale Komponente umfasst.

### TECHNOLOGISCHER HINTERGRUND

An Gebäuden und Einrichtungen, insbesondere auf Dächern, werden regelmäßig Photovoltaik-Anlagen angeordnet, die solare Strahlungsenergie photovoltaisch in elektrischen Strom umsetzt. Damit kann zumindest ein Teil der in dem Gebäude oder in der Einrichtung benötigten elektrischen Energie direkt aus der solaren Strahlungsenergie respektive der Sonnenstrahlung autark erzeugt werden. Sofern mit den Photovoltaik-Anlagen mehr Energie erzeugt wird als in dem Gebäude oder in der Einrichtung benötigt wird, ergibt sich insofern eine positive Gebäudeenergiebilanz, als die überschüssige Energie in Form von elektrischem Strom in das Primärenergienetz respektive in das allgemeine Stromnetz eingespeist werden kann. Dies reduziert die Energiekosten oder kann bei positiver Bilanz sogar zu finanziellen Einnahmen führen.

Problematisch bei der Nutzung solarer Strahlungsenergie in vielen geografischen Regionen ist, dass die Sonnenstrahlung zumindest zeitweise nicht ausreicht, um den Energie- respektive Strombedarf eines Gebäudes vollständig zu decken. Insbesondere bei Dunkelheit oder bei wetter- oder witterungsbedingter Abwesenheit direkter Sonneneinstrahlung kann kein Strom mit der Photovoltaik-Anlage erzeugt werden. Außerdem ist der Wirkungsgrad der photovoltaischen Stromerzeugung mit deutlich unter 50% insofern gering, als ein Teil der eintreffenden Sonnenenergie als Verlustwärme verloren geht, welche die Photovoltaik-Anlage und deren Umgebung lediglich aufheizt. US 2010/288334 wird als nächstliegende Stand der Technik angesehen und offenbar eine Vorrichtung mit dem Merkmale des Oberbegriff des Anspruchs 1. Zur besseren Nutzung der Verlustwärme haben sich Hybridsysteme bewährt, wie sie etwa der DE 20 2007 009 162 U1 zu entnehmen sind. Diese Hybridsysteme oder Hybridkollektoren umfassen neben einem Photovoltaik-Modul zur photovoltaischen Stromerzeugung zwecks platzsparender Unterbringung und leichter Montierbarkeit an einem Gebäude ein Solarthermie-Modul zur Umwandlung von Strahlungswärme in nutzbare thermische Energie. Die Kombination der Photovoltaik mit der Solarthermie führt zu einer Verbesserung des Wirkungsgrades. Die von dem Solarthermie-Modul umgesetzte Wärme kann direkt zum Heizen des Gebäudes oder zum Erwärmen von Brauchwasser genutzt werden. Die Anschaffungskosten für Photovoltaik-Anlagen können durch die Verwendung von Hybridkollektoren und der Nutzung der Verlustwärme in deutlich kürzerer Zeit vollständig amortisiert werden.

### DARSTELLUNG DER ERFINDUNG

Der Erfindung liegt vor diesem Hintergrund die Aufgabe zugrunde, Maßnahmen anzugeben, mit denen die Energiebilanz eines Gebäudes oder einer Einrichtung insbesondere bei der Verwendung von Photovoltaik-Anlagen mit Hybridkollektoren so verbessert wird, dass Anschaffungskosten für eine gebäudeeigene Energiegewinnung durch Einsparungen der Kosten für Energie aus dem Primärenergienetz und/oder durch Einnahmen bei der Einspeisung von erzeugter Energie in das Primärenergienetz verglichen mit dem Stand der Technik in kürzerer Zeit amortisierbar sind. Alternativ oder kumulativ soll der Bedarf an aus dem Netz entnommener Primärenergie dadurch reduziert werden, dass der Wirkungsgrad einer Photovoltaik-Anlage mit solarthermischer Verwertung der solaren Strahlungswärme verbessert wird. Diese Aufgabe wird durch eine Umwandlungsvorrichtung nach Anspruch 1 gelöst. Diese Aufgabe wird auch durch die Merkmale der unabhängigen Ansprüche 19 und 21 gelöst. Die Erfindung geht von der Erkenntnis aus, dass bei den bekannten Hybridkollektoren gemäß der DE 20 2007 009 162 U1 wegen des dort zwecks eines kompakten und eigenstabilen Modul-Aufbaus gewollten, durch Verkleben oder Verspannen hergestellten flächigen Körperkontaktes des Solarthermie-Moduls mit der Rückseite des Photovoltaik-Moduls die Wärmeträgerleitungen des Solarthermie-Moduls je nach dessen Betriebsbedingungen dem Photovoltaik-Modul ein Übermaß an thermischer Energie in Form von Wärme entziehen können. So kann es z. B. bei niedrigen Außentemperaturen dazu kommen, dass das Photovoltaik-Modul vereist, wodurch der Wirkungsgrad des Photovoltaik-Moduls u. U. auf Null reduziert wird.

In diametraler Abkehr von diesem bekannten Konzept schlägt die Erfindung die Unterbindung eines flächigen Körperkontaktes zwischen dem Solarthermie-Modul und dem Photovoltaik-Modul und das Einfügen eines z. B. kanalartigen Hohlraums zwischen dem flächigen Solarthermie-Modul und dem Photovoltaik-Modul vor. Demnach ist vorgesehen, dass das Solarthermie-Modul zumindest ein Flächenelement umfasst, in dem thermische Energie absorbierbar, an den in der Leitung geführten Wärmeträger übertragbar und darüber abführbar ist. Im Bereich des Flächenelements ist erfindungsgemäß zumindest ein Kanal angeordnet, in dem sich ein Gasmedium befindet, aus welchem thermische Energie auf das Flächenelement übertragbar ist. Der Kanal ist bevorzugt zwischen dem Photovoltaik-Modul und dem Flächenelement angeordnet. In Ausbreitungsrichtung der solaren Strahlung kann sich das Flächenelement hinter dem Kanal befinden und die Leitung hinter dem Flächenelement. So kann nicht nur aus dem Kanal thermische Energie entnommen werden sondern auch aus dem Bereich der Seite der Umwandlungsvorrichtung, die der solaren Strahlung abgewandt ist, d. h. aus dem Bereich der Rück- oder Unterseiteseite der Vorrichtung. Das Gasmedium kann durch den Kanal geführt werden oder durch ihn hindurchführbar sein. Das Flächenelement kann von dem Gasmedium umstömbar sein. Gegebenenfalls kann der Kanal so beschaffen sein, dass das Flächenelement in dem Kanal angeordnet ist. Es können auch mehrere Flächenelemente vorgesehen sein, beispielsweise ein erstes Flächenelement und ein zweites Flächenelement, ein drittes u. s. w.. Die Leitung kann zumindest streckenweise in einem zwischen zwei benachbarten Flächenelementen angeordneten Kanal, beispielsweise in einem zwischen dem ersten Flächenelement und dem zweiten Flächenelement angeordneten Kanal, angeordnet sein.

Die solare Strahlung kann von dem Photovoltaik-Modul vollständig absorbiert werden. Es kann auch eine teilweise Absorption und teilweise Reflektion respektive Transmission vorgesehen sein. Die Erwärmung in dem Solarthermie-Modul kann sich aus mehreren Beiträgen zusammensetzten: Das Photovoltaik-Modul kann bei hoher Absorption erwärmt werden und die Wärme als Wärmestrahlung an das Solarthermie-Modul übertragen. Ein Teil der Wärme kann in dem Solarthermie-Modul auch aus dort eintreffender solarer Strahlung gewonnen werden, welche das Photovoltaik-Modul transmittiert.

Der Kanal, der in dem vorzugsweise mit seitlichen Öffnungen versehenen Rahmen angeordnet ist, umfasst keine festen oder porösen Stoffe zur Wärme-Isolierung. Die Leitung kann in einem Kanal angeordnet sein. Wahlweise kann die Leitung auch außerhalb zumindest eines Kanals angeordnet sein, beispielsweise zwischen dem Solarthermie-Modul und der Fläche, auf dem die erfindungsgemäße Vorrichtung angeordnet ist. Bei dieser Fläche kann es sich um den Ausschnitt eines Gebäudedaches oder einer Gebäudefassade handeln. Die Öffnungen des Rahmens können in den Kanal münden. Dadurch können zumindest Komponenten der Module des Hybridkollektors bereichsweise mit dem Gasmedium respektive mit Luft umspült respektive umströmt werden. Weder das Flächenelement noch die Leitung zur fluidischen Führung des Wärmeträgers sind thermisch isoliert.

Der Kanal kann beispielsweise dadurch gebildet sein, dass zwischen dem Photovoltaik-Modul und dem Flächenelement des Solarthermie-Moduls und ggf. zwischen dem Solarthermie-Modul und dem Gebäude oder der Einrichtung ein Freiraum oder ein Hohlraum angeordnet ist. Der Freiraum ist mit dem Gasmedium respektive mit Luft befüllbar oder befüllt, es kann zweckmäßig sein, wenn die Luft durch den Freiraum hindurchströmen kann. Insbesondere ist der Freiraum nicht mit einem festen oder porösen Material befüllt oder ausgeschäumt. Zur Bildung des Freiraums kann ein abstandhaltendes Mittel vorgesehen sein, das das Flächenelement insbesondere von dem Photovoltaik-Modul beabstandet. Der Kanal kann zumindest von dem Flächenelement und einer Fläche des Photovoltaik-Moduls begrenzt sein. Das abstandhaltende Mittel kann dem Flächenelement, dessen Befestigungsmitteln oder dem Rahmen der erfindungsgemäßen Vorrichtung zugeordnet sein.

Infolge der Wirkung der Sonnenstrahlung wird das Flächenelement aufgeheizt respektive thermisch angeregt. Die thermische Energie wird durch primäre und/oder sekundäre Strahlung der Sonne bzw. des Photovoltaik-Moduls und/oder von dem Gasmedium auf das Flächenelement und/oder auf den in der Leitung geführten Wärmeträger übertragen. Die thermische Energie kann auch von dem Photovoltaik-Modul, welches sich in Folge der Sonneneinstrahlung aufheizt, also der leistungsmindernden Wärme des Photovoltaik-Moduls entstammen, von wo sie durch Abstrahlung, Wärmeleitung und/oder durch Konvektion auf das Gasmedium in den Kanal und das Solarthermie-Modul übertragen wird. Das heißt, bei direkter Sonneneinstrahlung trifft solare Strahlungsenergie auf das Photovoltaik-Modul. Ein Teil des Energieeintrags wird photovoltaisch umgesetzt, ein Teil wird in Wärme umgesetzt, wodurch sich das Photovoltaik-Modul aufheizt. Unter Umständen kann ein weiterer Teil des Energieeintrags das Photovoltaik-Modul auch durchstrahlen. Die Wärme wird von dem aufgeheizten Photovoltaik-Modul im Wesentlichen in den gesamten Raumwinkel abgestrahlt, so dass nur ein Teil der Verlustwärme auf das Solarthermie-Modul übertragen wird. Das dem Solarthermie-Modul zugeordnete Flächenelement absorbiert diesen Teil der (Verlust-)Wärme des Photovoltaik-Moduls. Die absorbierte Wärme kann beispielsweise nach fluidischem Zuführen des Wärmeträgers an eine Wärmepumpe mit der Wärmepumpe auf ein höheres thermisches Niveau angehoben werden, wodurch die Energiebilanz eines mit der erfindungsgemäßen Vorrichtung bestückten Gebäudes verbessert wird. Das Solarthermie-Modul kann mit Hilfe des Kanals aber auch ohne Sonneneinstrahlung Wärme aus der Umgebungsluft entnehmen und mithin auch nachts wirksam sein und so einen Betrag zur Energiebilanz eines Gebäudes oder einer Einrichtung liefern. Mit der erfindungsgemäßen Vorrichtung kann eine positive Energiebilanz eines Gebäudes oder einer Einrichtung auch bei Außentemperaturen zwischen -12°C und 0°C erreicht werden.

Durch den Kanal wird insbesondere in der warmen Jahreszeit die Bildung von leistungsmindernder Stauwärme am und in der Umgebung und insbesondere unterhalb des Photovoltaik-Modul/s verhindert oder zumindest vermindert. Dadurch kann u. A. vermieden werden, dass sich der Wärmeträger zersetzt. Bei einem glykolhaltigen Wärmeträger kann eine Zersetzung oberhalb von 165°C eintreten, je nach Glykolanteil im Wärmeträger. Der mit Gas respektive mit Luft gefüllte Kanal umfasst ein Dissipationsvolumen für die thermische Energie. Das Dissipationsvolumen kann die Funktion eines thermischen Schutzpolsters erfüllen.

Der Kanal ist mit Umgebungsluft befüllt und insofern offen, als Umgebungsluft durch zumindest eine im Kanal angeordnete Öffnung in den Kanal eindringen kann. Der Kanal ist mit Umgebungsluft spülbar oder durchströmbar. So kann bereits aus der Umgebungsluft, die bereits durch die Einwirkung solarer Energie thermisch angeregt respektive erwärmt ist, von dem Flächenelement thermische Energie entnommen und auf den Wärmeträger übertragen werden. Dies kann etwa abends oder nachts der Fall sein, wenn keine direkte Sonnenstrahlung auf das Photovoltaik-Modul trifft. Dazu wird, wie gesagt, die Energiebilanz eines Gebäudes oder einer mit der erfindungsgemäßen Vorrichtung ausgerüsteten Einrichtung auch bei Abwesenheit direkter Sonneneinstrahlung verbessert.

Es hat sich als zweckmäßig erwiesen, wenn das Flächenelement aus einem Metall oder einer Metalllegierung, insbesondere aus Aluminium gebildet ist. Aluminium hat eine vergleichsweise geringe Dichte, wodurch das Flächenelement ein handhabbares Gewicht aufweist. Dadurch ist das Flächenelement kostengünstig zu transportieren und einfacher zu montieren. Gleichzeitig hat Aluminium ausreichende Wärmeleiteigenschaften, so dass die absorbierte thermische Energie schnell und verlustarm auf den Wärmeträger übertragbar ist. Das Flächenelement, das auch als Absorberplatte bezeichnet werden kann, umfasst zumindest eine Absorberfläche, die ober- und/oder unterseitig angeordnet sein kann. Die Leitung für den Wärmeträger kann auf der Absorberfläche und/oder innerhalb des Flächenelements respektive der Absorberplatte angeordnet sein. Die Anordnung der Leitung in dem Flächenelement kann beispielsweise so erfolgen, dass in der Absorberplatte eine oder mehrere Bohrungen oder z.B. sickenartige Kanäle verlaufen.

Nicht nur in diesem Zusammenhang ist es besonders vorteilhaft, wenn die Leitung, in dem der Wärmeträger fluidisch führbar ist, aus einem Metall oder einer Metalllegierung, insbesondere aus Aluminium gebildet ist. Eine Aluminiumleitung wirkt sich günstig auf das Gesamtgewicht der Vorrichtung aus, die bevorzugt auf Dächern und/oder an Fassaden montiert wird. Wenn sowohl das Flächenelement als auch die Leitung oder die Leitungen aus einem identischen Metall oder einer identischen Metalllegierung, insbesondere aus Aluminium, gebildet sind, ist dies auch zur Vermeidung einer durch eine Kontaktspannung zwischen unterschiedlichen Metallen veranlassten Korrosion vorteilhaft.

Die Leitung kann mehrere Abwinklungen umfassen, beispielsweise kann die Leitung einen mäanderartigen Verlauf auf der Absorberfläche aufweisen. Die Leitung kann als Rohrregister gebildet sein. Dadurch wird das Verhältnis von Absorberfläche zu Leitungslänge kleiner, wodurch der gesamte, zwischen der Leitung und dem Flächenelement respektive der Absorberfläche gebildete Kontaktbereich größer wird. Je größer der Kontaktbereich zwischen Leitung und Flächenelement ist, desto effizienter ist die Energieübertragung zwischen dem Flächenelement und dem in der Leitung geführten Wärmeträger. Außerdem führt eine mäanderartige Ausgestaltung der Leitung dazu, dass die Kontaktfläche zwischen dem Mantel der Leitung und dem in dem Kanal enthaltenen Gasmedium größer wird. Dadurch kann mehr thermische Energie aus dem Gasmedium auf die Leitung und von dort auf den Wärmeträger übertragen werden und zur weiteren Nutzung bereitgestellt werden.

Der Wärmeträger kann ein beispielsweise ein glykolhaltiges, insbesondere flüssiges Fluid umfassen, das, gewünschten Falls, bei niedrigem Druck unter Wärmezufuhr in die Gasphase wechselt und nach Kompression unter Wärmeabgabe wieder kondensiert. Als Wärmeträger kann auch ein an sich bekanntes Kältemittel verwendet werden.

Zweckmäßig für den Wärmetransport von dem Photovoltaik-Modul respektive von dem Gasmedium in dem Kanal zu dem Wärmeträger ist es, wenn die Leitung so angeordnet ist, dass zwischen der Leitung und dem Flächenelement zumindest ein thermischer Kontakt respektive ein oder mehrere Wärmeleitpunkte gebildet sind. Zur Bildung eines thermischen Kontaktes zwischen Leitung und Flächenelement kann die Leitung auf dem Flächenelement angeordnet und befestigt sein, wie z.B. durch Schweißen. Das Flächenelement kann die Leitung mechanisch tragen. So wird ein direkter, beispielsweise linienartiger Kontakt gebildet. Wahlweise kann die Leitung über Befestigungsmittel an dem Flächenelement befestigt sein, so dass die Befestigungsmittel einen thermischen Kontakt bilden, an dem thermische Energie (Wärme) von dem Flächenelement auf die Leitung und von der Leitung auf den in der Leitung geführten Wärmeträger übertragen wird.

Das Flächenelement kann erste Befestigungsmittel zum mechanischen Befestigen des Flächenelements an oder in einer Halterung des Kollektors umfassen. Das Flächenelement kann plattenartig geformt sein und mit seiner Oberseite einem Photovoltaik-Modul des Hybridkollektors zugewandt sein. Die Unterseite kann einem Bereich des Gebäudedaches oder einer Gebäudefassade zugewandt sein. Das Flächenelement kann zweite Befestigungsmittel umfassen zum Befestigen der Leitung an dem Flächenelement.

Zur sicheren und einfach durchzuführenden Montage und Wartung kann das Flächenelement mit dem Solarthermie-Modul und/oder mit dem Rahmen mechanisch verbunden, insbesondere lösbar verschraubt sein. Der Rahmen, in dem die Module angeordnet sind, kann aus einem Metall oder einer Metalllegierung, insbesondere aus im Wesentlichen Aluminium, gefertigt sein. In Diesem Fall ergibt sich eine besonders leichte und dennoch ausreichend stabile Konstruktion der Vorrichtung. Wahlweise kann das Flächenelement auch direkt mit dem Photovoltaik-Modul verschraubt sein, oder an einer Halterung des Kollektors angeordnet sein. Die Halterung kann aus einem Winkelelement gebildet sein, welches an dem Rahmen angeordnet ist.

Der Rahmen kann auf und/oder an einem Gebäude befestigbar, insbesondere lösbar befestigt sein. Zweckmäßig ist eine Befestigung auf einem Dach oder an einer Fassade. Alternativ kann der Rahmen auch auf einem Boden oder einem in einem Boden angeordneten Fundament angeordnet werden, wobei die Bodenfläche oder das Fundament geneigt sein kann. Empfehlenswert ist eine Ausrichtung des Rahmens, bei der tagsüber direkte Sonnenstrahlung auf das Photovoltaik-Modul gegeben ist. Je nach geografischer Lage kann eine Ausrichtung in bevorzugt südlicher Richtung zweckmäßig sein.

Zum Speichern überschüssiger, nicht direkt genutzter elektrischer Energie kann es vorteilhaft sein, wenn an dem Photovoltaik-Modul ein Speicher für elektrische Energie elektrisch angeschlossen ist.

Zur Umsetzung der thermischen Energie in beispielsweise mechanische oder elektrische Energie kann an der Leitung für den Wärmeträger eine Pumpenleitung direkt, d. h. fluidisch, oder über Wärmeaustausch angeschlossen sein. Der Wärmeträger kann fluidisch in die Wärmepumpe förderbar oder zuführbar sein. Die Wärmepumpe kann als Wärme-Kraft-Maschine verstanden werden, die unter Aufwendung von technischer Arbeit thermische Energie aus einem Reservoir aufnimmt und auf einem angehobenen Temperaturniveau als Nutzwärme auf ein zu beheizendes System überträgt. Dieses System kann an einen Generator zur Stromerzeugung oder an eine Heizung gekoppelt sein.

Das Verhältnis von nutzbarer Wärmeleistung zu zugeführter (elektrischer) Kompressionsleistung wird als Leistungszahl bezeichnet (Coefficient Of Performance, COP). Bei einer Außentemperatur von etwa 0°C kann mit der erfindungsgemäßen Vorrichtung eine Leistungszahl von etwa COP = 4,0 erreicht werden. Das bedeutet, dass bei einer Leistungsaufnahme von etwa 1 kW (1 kW = 1.000 Watt) aus dem primären Stromnetz etwa 4 kW Leistung zur thermischen Nutzung zur Verfügung steht. Beispielsweise kann aus einer Dachfläche von etwa 40 m², die mit erfindungsgemäßen Umwandlungsvorrichtungen nahezu flächendeckend bestückt ist, eine Leistung von 5.000 kW Strom erzeugt werden, die in eine Leistung von etwa 20.000 kW Wärme umgewandelt werden kann. Bei einer Außentemperatur von etwa -8°C beträgt der Leistungsfaktor immerhin noch etwa COP = 3,0.

Zur Verwirklichung einer zu Heizzwecken dienenden Bypassleitung kann die Pumpenleitung zumindest eine Abzweigung aufweisen, mit der der Wärmeträger in einen Wärmekreislauf zur unmittelbaren Wärmeabgabe und/oder in einen Wärmespeicher zur Speicherung der thermischen Energie fluidisch förderbar ist.

Eine Verbesserung der Energiebilanz eines Gebäudes wird auch durch ein ein- oder mehrteiliges Flächenelement zum Übertragen thermischer Energie von einem Gasmedium auf einen Wärmeträger nach Anspruch 15 erreicht.

Das Flächenelement kann in Solarthermie-Module und/oder Hybridkollektoren beispielsweise nachträglich eingesetzt werden. Es kann verschraubt, verklebt oder gesteckt werden. Beispielsweise kann es mit dem Photovoltaik-Modul des Hybridkollektors verklebt werden, was den Vorteil hat, dass das Photovoltaik-Modul nicht mit Bohrungen für eine Verschraubung versehen werden muss. Das Flächenelement umfasst zumindest eine Leitung, welche darauf angeordnet sein kann oder zwischen Teilen respektive Absorberplatten des Flächenelementes. Die Leitung ist mit dem Gasmedium zumindest streckenweise umströmbar. Es weist ferner einen thermischen Kontakt zwischen dem Flächenelement und der Leitung auf. Das Flächenelement ist von eigenständiger erfinderischer Bedeutung und kann bevorzugt aus Aluminium oder einer Aluminiumlegierung gebildet sein.

Eine Verbesserung der Energiebilanz eines Gebäudes wird auch durch eine Nachrüstfähige Energieerzeugungsvorrichtung zur Erzeugung thermischer und/oder elektrischer Energie nach Anspruch 17 erreicht. Die nachrüstfähige Energieerzeugungsvorrichtung ist neben, auf oder an einem Gebäude etwa als Nachrüst-Bausatz oder-Kit anordbar und in dem Gebäude nutzbar. Die Energieerzeugungsvorrichtung ist von eigenständiger erfinderischer Bedeutung. Sie umfasst mehrere, untereinander elektrisch und/oder fluidisch gekoppelte Umwandlungsvorrichtungen gemäß der vorbeschriebenen Art. Es sind Befestigungsmittel zum nachträglichen Befestigen der Rahmen der Umwandlungsvorrichtungen an einer vorhandenen Fassade oder auf einem vorhandenen Dach eines vorhandenen Gebäudes vorgesehen. Eine Befestigung auf dem Boden neben dem Gebäude kann auch vorgesehen sein. Außerdem sind fluidische Verbindungsmittel zum fluidischen Verbinden zumindest einer Leitung mit einem thermodynamischen Verbraucher und/oder thermodynamischen Speicher vorgesehen. Dabei können Schlauch- oder Rohrverbinder vorgesehen sein. Es sind ferner elektrische Verbindungsmittel zum elektrischen Verbinden zumindest eines Photovoltaik-Moduls mit einem elektrischen Verbraucher und/oder elektrischen Speicher vorgesehen. Es können elektrische Steckverbinder vorgesehen sein. Schließlich sind Verbindungsmittel vorgesehen zum elektrischen und/oder fluidischen Verbinden der gekoppelten Umwandlungsvorrichtungen untereinander.

Bei dem elektrischem Verbinden wird ein elektrischer Kontakt zwischen den verbundenen Komponenten hergestellt, und beim fluidischen Verbinden wird ein Leitungsabschnitt zum Hindurchleiten eines Fluids, beispielsweise einer Flüssigkeit oder eines Gasmediums, erzeugt respektive fortgesetzt. Das fluidische Verbinden kann sich auf die Leitung beziehen, in der der Wärmeträger geführt wird oder auf den Kanal, in dem das Gasmedium angeordnet ist.

Bevorzugt kann der thermodynamische Verbraucher und/oder der elektrische Verbraucher zumindest eine Wärmepumpe umfassen, die fluidisch mit zumindest einer Leitung verbindbar ist. In der Wärmepumpe kann dem Wärmeträger thermisehe Energie entziehbar sein. Durch die Wärmepumpe ist in dem Gebäude nutzbare thermische Energie bereitstellbar. Insbesondere kann die Wärmepumpe elektrisch mit den Photovoltaik-Modulen verbunden sein, so dass - Sonneneinstrahlung auf das Photovoltaik-Modul vorausgesetzt - keine elektrische Energie aus dem Energienetz zum Betrieb der Wärmepumpe erforderlich ist.

Die Primärseite der Komponenten der Vorrichtung, die mit dem Wärmeträger in unmittelbarem Kontakt stehen, d. h. die Leitung respektive Leitungen, die Verbindungselemente zwischen den Leitungen gekoppelter Module, und wesentliche (thermodynamische) Komponenten der Wärmepumpe respektive des Abschnitts der Wärmepumpe, in dem dem Wärmeträger Wärme entzogen wird, können bevorzugt aus genau einer Metallsorte gebildet sein, beispielsweise aus Aluminium oder aus genau einer Aluminiumlegierung. Insbesondere sind die dieser Primärseite zugeordneten Komponenten der Vorrichtung frei von Messing und frei von Kupfer, d. h. die dort verwendeten Materialien enthalten kein Messing und kein Kupfer. Mit diesen Maßnahmen gelingt es, die erforderliche Zertifizierung und Versicherung der Vorrichtung zu ermöglichen.

Eine Verbesserung der Energiebilanz eines Gebäudes wird im Übrigen auch dann erreicht, wenn die vorbeschriebene, erfindungsgemäße Vorrichtung zum zur Umwandlung von solarer Strahlungsenergie in elektrischen Strom und/oder in Wärme gemäß Anspruch 19, insbesondere in den warmen Monaten eines Jahres, zum Kühlen des Gebäudes oder einer Einrichtung verwendet wird. Damit wird der Energieaufwand für Klimaanlagen reduziert.

Es kann demnach vorgesehen sein, dass die Leitung mit einer Kraft-Wärme-Maschine fluidisch verbunden ist. Die Wärme-Kraft-Maschine wird so betrieben, dass sie dem Wärmeträger und somit auch dem Flächenelement thermische Energie entzieht, wodurch das Flächenelement und seine Umgebung - beispielsweise ein Dach oder eine Dachgeschoss des Gebäudes - kühlbar sind. Dabei kann die Wärme-Kraft-Maschine eine Wärmepumpe sein. Es kann auch ein Kühlen des Photovoltaik-Moduls vorgesehen sein, um damit den Wirkungsgrad des Photovoltaik-Moduls zu verbessern.

Alternativ dazu kann, insbesondere in den kalten Monaten eines Jahres, gemäß Anspruch 20 die vorbeschriebene, erfindungsgemäße Vorrichtung zum zur Umwandlung von solarer Strahlungsenergie in elektrischen Strom und/oder in Wärme zum Beheizen eines Gebäudes oder eines Gebäudeteils verwendet werden.

Demnach ist die Leitung mit einer Kraft-Wärme-Maschine fluidisch verbunden, die so betrieben wird, dass das Flächenelement mit thermischer Energie beaufschlagt wird. Dadurch sind das Flächenelement und seine Umgebung heizbar. Die Kraft-Wärme-Maschine kann aus einer reversibel betriebenen Wärmepumpe gebildet sein. Das Heizen der erfindungsgemäßen Vorrichtung durch Richtungsumkehr des Wärmetransports kann insbesondere dann zweckmäßig sein, wenn die Photovoltaik-Module im Winter mit Schnee und/oder Eis bedeckt sind, wodurch der photovoltaische Wirkungsgrad erheblich reduziert wird. Bei einer solchen wetter- und witterungsbedingten Reduzierung des Wirkungsgrads des Photovoltaik-Moduls kann es für die Gebäudeenergiebilanz vorteilhaft sein, kurzzeitig Energie zum Beheizen der Vorrichtung zu investieren, um anschließend über einem längeren Zeitraum wieder mit der schnee- und eisfreien Vorrichtung mit verbessertem Wirkungsgrad photovoltaisch Strom zu generieren.

Die Energiebilanz eines mit einem Hybridkollektor ausgerüsteten Gebäudes oder einer anderen Einrichtung kann auch durch ein Verfahren zur Umwandlung von solarer Strahlungsenergie in elektrischen Strom und/oder in Wärme nach Anspruch 21 verbessert werden.

Demnach wird bei dem Verfahren die direkt eintreffende solare Strahlungsenergie in einem Photovoltaik-Modul zumindest teilweise photovoltaisch in elektrischen Strom umgewandelt. Die durch die Einwirkung der solaren Strahlungsenergie erzeugte Wärme wird solarthermisch genutzt, indem zumindest ein Teil der solar erzeugten Wärme absorbiert wird und auf einen in zumindest einer Leitung fluidisch geführten Wärmeträger übertragen wird. Die Absorption der solar erzeugten Wärme erfolgt zumindest teilweise in einem mit der Leitung in thermischem Kontakt stehenden Flächenelement so, dass die zu absorbierende Wärme zumindest teilweise einem zwischen dem Photovoltaik-Modul und dem Flächenelement angeordneten Kanal, in dem ein Gasmedium enthalten ist und/oder der von einem Gasmedium durchströmt wird, entnommen wird. Die zu absorbierende Wärme kann auch der Wärmeabstrahlung und/oder der Durchstrahlung des Photovoltaik-Moduls entnommen werden.

Es ist von Vorteil, wenn mit zumindest einem Teil des photovoltaisch erzeugten elektrischen Stroms eine an der Leitung angeschlossene Wärmepumpe betrieben wird, in der die von dem Flächenelement absorbierte und auf den Wärmeträger übertragene thermische Energie in elektrische Energie transformiert wird. Wahlweise kann in einem oder mehreren Speichern elektrische und/oder thermische Energie gespeichert werden, so dass die Energie auch bei Abwesenheit der Einwirkung solarer Strahlungsenergie zur Verfügung steht.

Die vorgenannten sowie die beanspruchten und in den Ausführungsbeispielen beschriebenen, erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel einer Vorrichtung zur Umwandlung von solarer Strahlungsenergie in elektrischen Strom und/oder in Wärme dargestellt ist. Auch einzelne Merkmale der Ansprüche oder der Ausführungsformen können mit anderen Merkmalen anderer Ansprüche und Ausführungsformen kombiniert werden.

### KURZBESCHREIBUNG DER FIGUREN

In der Zeichnung zeigen
- Fig. 1: eine Vorrichtung zur Umwandlung von solarer Strahlungsenergie in elektrischen Strom und/oder in Wärme im Vertikalschnitt;
- Fig. 2: eine detaillierte Ansicht eines Ausschnitts einer Vorrichtung gemäß Fig. 1;
- Fig. 3: eine Aufsicht auf ein als Absorberplatte gebildetes Flächenelement; und
- Fig. 4: eine seitliche Ansicht auf eine alternative Ausgestaltung eines zwei Absorberplatten umfassenden Flächenelements.

### DETAILLIERTE BESCHREIBUNG VON AUSFÜHRUNGSBEISPIELEN

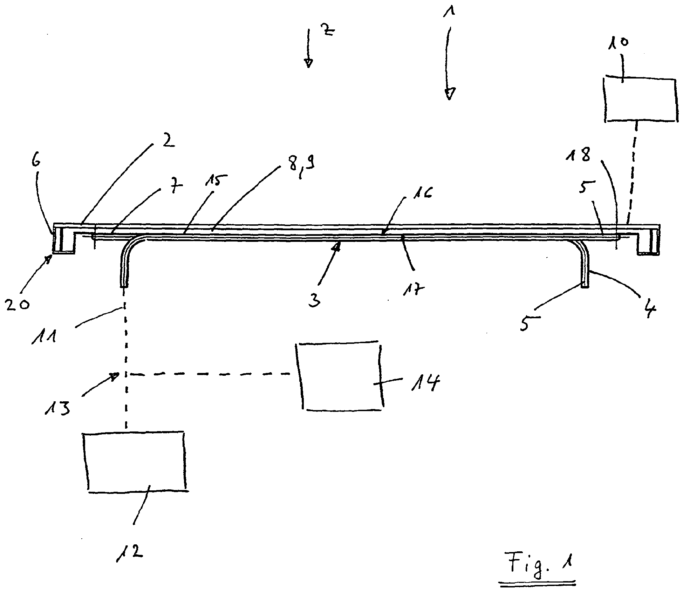

Einen vertikalen Schnitt durch eine Vorrichtung 1 zur Umwandlung von solarer Strahlungsenergie in elektrischen Strom und/oder in Wärme kann der Fig. 1 entnommen werden. Die Vorrichtung 1 umfasst ein Photovoltaik-Modul 2 zur photovoltaischen Umwandlung von solarer Strahlungsenergie in elektrischen Strom. Bezogen auf die Ausbreitungsrichtung z der solaren Strahlung ist hinter respektive unter dem Photovoltaik-Modul 2 ein Solarthermie-Modul 3 zur Absorption von thermischer Energie angeordnet. Die thermische Energie wird insbesondere durch solare Energie erzeugt. In einer dem Solarthermie-Modul 3 zugeordneten Leitung 4 ist ein Wärmeträger 5 fluidisch führbar. Die thermische Energie wird auf den Wärmeträger 5 übertragen, über den sie aus der Vorrichtung 1 abführbar ist.

Die Vorrichtung 1 umfasst gemäß Fig. 1 einem Rahmen 6, in oder an dem das Photovoltaik-Modul 2 und das Solarthermie-Modul 3 so anordbar sind, dass die solare Strahlung auf das Photovoltaik-Modul 2 direkt einwirkt. Ein Teil der solaren Energie wird photovoltaisch in elektrischen Strom umgewandelt, ein weiterer Teil wird in thermische Energie transformiert und über den Wärmeträger 5 abgeführt.

Der Fig. 1 ist zu entnehmen, dass das Solarthermie-Modul 3 ein als Absorberplatte gebildetes Flächenelement 7 umfasst, in dem thermische Energie absorbierbar, an den in der Leitung 4 geführten Wärmeträger 5 übertragbar und darüber abführbar ist. Zwischen dem Photovoltaik-Modul 2 und der Absorberplatte 7 ist ein Kanal 8 angeordnet, in dem sich ein Gasmedium 9 befindet, aus welchem thermische Energie auf die Absorberplatte 7 übertragbar ist. Das Gasmedium 9 ist bevorzugt aus Luft gebildet. Der Kanal 8 wird durch einen Freiraum zwischen dem Photovoltaik-Modul 2 und den Solarthermie-Modul 3 respektive der Absorberplatte 7 gebildet, wobei der Kanal 8 durch das Modul 2, die Absorberplatte 7 und durch zumindest einen Teil des Rahmens 6 begrenzt wird.

Die in Fig. 1 dargestellte Absorberplatte 7 ist aus Aluminium gebildet, insbesondere mit einer Stärke von etwa 0,5 mm. Die Stärke der Absorberplatte 7 kann zwischen 0,3 mm und 3 mm betragen. Die Leitung 4 ist ebenfalls aus Aluminium gebildet. Die Leitung 4 weist einen im Wesentlichen runden Querschnitt auf, dessen äußerer Durchmesser etwa 8 bis 20 mm beträgt. Der innere Durchmesser der Rohrleitung 4 beträgt etwa 6 bis 18 mm.

Schematisch dargestellt ist in Fig. 1 anstelle einer Netzeinspeisung der elektrische Anschluss eines Speichers 10 an dem Photovoltaik-Modul 2. In dem Speicher 10, der beispielsweise eine Batterie oder einen Akkumulator umfassen kann, ist elektrische Energie speicherbar und bei Bedarf entnehmbar.

Ebenfalls schematisch dargestellt ist der fluidische Anschluss der Leitung 4 für den Wärmeträger 5 an einer Pumpenleitung 11, die fluidisch an einer Wärmepumpe 12 angeschlossen ist, der ein Speicher (nicht dargestellt) vorgeschaltet sein kann. Der Wärmeträger 5 ist über die Pumpenleitung 11 fluidisch so in die Wärmepumpe 12 förderbar, dass die von dem Wärmeträger 5 aufgenommene thermische Energie auf ein höheres thermisches Niveau anhebbar ist.. Wahlweise kann der Wärmepumpe 12 ein in Fig. 1 nicht dargestellter thermischer Energiespeicher zugeordnet sein, in dem thermische Energie speicherbar und aus dem sie bedarfsweise entnehmbar ist. Der Fig. 1 ist schematisch zu entnehmen, dass die Pumpenleitung 11 eine Abzweigung 13 aufweist, mit der der Wärmeträger 5 in einen Wärmekreislauf 14 fluidisch förderbar ist. Dort kann die Wärme direkt als Nutzwärme beispielsweise an eine Gebäudeheizung abgegeben werden.

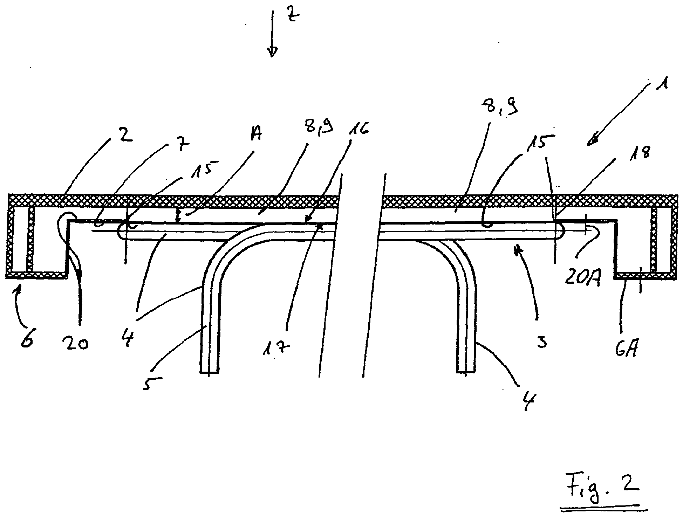

In Fig. 2 ist ein detaillierter Ausschnitt der Darstellung der Vorrichtung 1 zur zur Umwandlung von solarer Strahlungsenergie in elektrischen Strom und/oder in Wärme gemäß Fig. 1 dargestellt. Demnach ist die Leitung 4 so angeordnet, dass zwischen der Leitung 4 und der Absorberplatte 7 ein thermischer Kontakt 15 gebildet ist, über den thermische Energie respektive Wärme von dem Flächenelement 7 auf die Leitung 4 und von der Leitung 4 auf den Wärmeträger 5 übertragbar und über den Wärmeträger 5 abführbar ist, z.B. durch Verschweißung.

Der Fig. 2 ist darüber hinaus zu entnehmen, dass das Flächenelement 7 mit einem an dem Rahmen 6 vorgesehenen Winkelelement 20 mechanisch verbunden und das Winkelelement 20 derart gestaltet ist, dass das Solarthermie-Modul 3 sowohl von dem Photovoltaik-Modul als auch von der Rahmenunterseite 6A beabstrandet ist. Die Verbindung kann beispielsweise als Schraubverbindung 20A gebildet sein, die zu Wartungs- und Demontagezwecken lösbar ist. Es können (nicht dargestellte) abstandshaltende Mittel wie etwa Distanzelemente vorgesehen sein, die das Flächenelement 7 zu dem Photovoltaik-Modul beabstanden. Das Abstand A kann zwischen 2 mm und 40 mm betragen, vorzugsweise kann der Abstand A 8 mm betragen. Der Rahmen 6 ist auf und/oder an einem Gebäude befestigbar. Beispielsweise kann der Rahmen 6 auf dem Dach eines Gebäudes befestigt werden.

Gemäß Fig. 2 ist das Flächenelement 7 als Aluminium-Platte mit einer Oberseite 16 und einer Unterseite 17 gebildet. Der Kanal 8 zur fluidischen Führung des Gasmediums 9 ist an der Oberseite 16 der Absorberplatte 7 angeordnet. An der Unterseite 17 der Absorberplatte 7 ist die Leitung 4 respektive das Rohrregister angeordnet. Die Leitung 4 ist mit Befestigungsmitteln an der Absorberplatte 7, vorzugsweise durch Schweißen, gewünschten Falls aber auch lösbar befestigt. Dadurch entsteht ein inniger Kontakt zwischen der Leitung 4 und der Absorberplatte 7, über den thermische Energie respektive Wärme übertragbar ist.

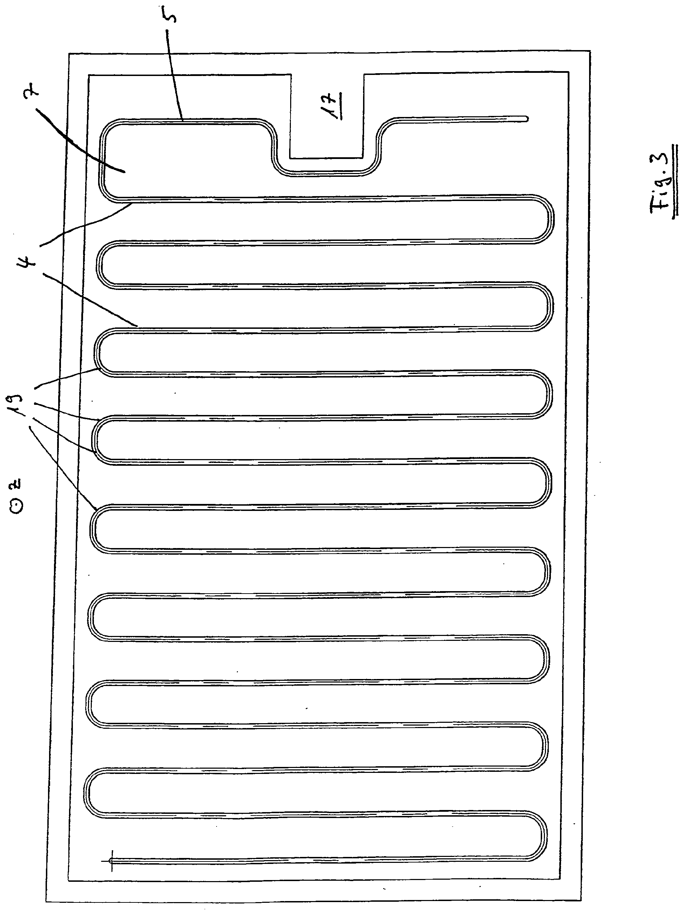

Eine Aufsicht auf die Unterseite 17 eines flächigen, als Aluminiumplatte gebildeten Flächenelements 7 gemäß der Figuren 1 und 2 kann der Fig. 3 entnommen werden. Auf der Unterseite 17 ist die Leitung 4 so befestigt, dass das Flächenelement 7 die Leitung 4 mechanisch trägt. Die Leitung 4 weist mehrere Abwinklungen 19 auf und verläuft im Wesentlichen mäanderartig auf der Absorberplatte 7. Durch die mäanderartige Führung der Leitung 4 wird der Kontaktbereich 15 zwischen Leitung 4 und Absorberplatte 7 vergrößert, wodurch der Wärmetransport von der Absorberplatte 7 auf die Leitung 4 respektive den in der Leitung 4 geführten Wärmeträger 5 mit geringeren Verlusten möglich ist. Die Leitung kann an einer oder an mehreren Seiten des Flächenelements zumindest streckenweise über das Flächenelement hinausragen respektive das Flächenelement überragen.

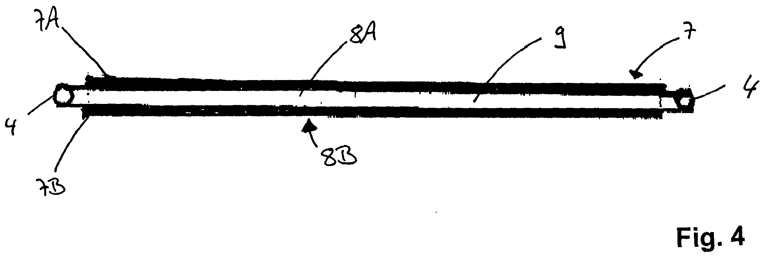

Fig. 4 zeigt seine seitliche Ansicht eines Flächenelementes 7, welches mehrteilig aus den Absorberplatten 7A und 7B bebildet ist. Zwischen den Absorberplatten 7A und 7B ist ein erster Kanal 8A angeordnet. Nur teilweise dargestellt ist ein zweiter Kanal (8B), welcher an die Absorberplatte 7B anschließt. Der Kanal 8A ist so beschaffen, dass das in dem Kanal 8A angeordnete Gasmedium 9 aus dem Kanal 8A hinaus und wieder hineinströmen kann. Es kann auch ein durch Strömung bedingter Austausch des Gasmediums 9 zwischen den Kanälen 8A und 8B vorgesehen sein. Die Anordnung der Kanäle 8A und 8B bewirkt, dass das Flächenelement 7A, 7B respektive die Leitung 4 von dem Gasmedium 9 umströmt wird.

### BEZUGSZEICHENLISTE

- 1: Vorrichtung zur Umwandlung von solarer Strahlungsenergie
- 2: Photovoltaik-Modul
- 3: Solarthermie-Modul
- 4: Leitung
- 5: Wärmeträger
- 6: Rahmen
- 6A: Rahmenunterseite
- 7, 7A, 7B: Flächenelement, Absorberplatte
- 8, 8A, 8B: Kanal
- 9: Gasmedium
- 10: elektrischer Speicher
- 11: Pumpenleitung
- 12: Wärmepumpe
- 13: Abwinklung
- 14: Wärmekreislauf
- 15: thermischer Kontakt
- 16: Oberseite
- 17: Unterseite
- 18: Befestigungsmittel
- 19: Abzweigung
- 20: Winkelelement
- 20A: Schraubverbindung

- z: Ausbreitungsrichtung der solaren Strahlung
- A: Abstand

## Patentansprüche

1. Umwandlungsvorrichtung zum Umwandeln von solarer Strahlungsenergie in elektrischen Strom und in Wärme, oder von solarer Strahlungsenergie in elektrischen Strom oder in Wärme, mit
einem Photovoltaik-Modul (2) zur photovoltaischen Umwandlung von solarer Strahlungsenergie in elektrischen Strom,
einem Solarthermie-Modul (3) zur Absorption von thermischer Energie, welches aus einem Flächenelement (7) und zumindest einer daran angeordneten Leitung (4) besteht, wobei ein Wärmeträger (5) in der zumindest einen Leitung (4) fluidisch führbar und einer Wärmepumpe (12) zuführbar ist, und
einem Rahmen (6), in dem das Photovoltaik-Modul (2) und das Solarthermie-Modul (3) so angeordnet sind, dass die solare Strahlung auf das Photovoltaik-Modul (2) direkt einwirkt, und dass sich das Solarthermie-Modul (3) bezogen auf die Ausbreitungsrichtung (z) der solaren Strahlung im Wesentlichen hinter dem Photovoltaik-Modul (2) befindet,
**dadurch gekennzeichnet, dass** zwischen dem Photovoltaik-Modul (2) und dem Flächenelement (7) zumindest ein Kanal (8) angeordnet ist, in dem sich Umgebungsluft (9) befindet, aus welcher oder durch welche thermische Energie auf das Flächenelement (7) übertragen wird, wobei der Kanal (8) insofern offen ist, als Umgebungsluft (9) durch zumindest eine im Kanal (8) angeordnete Öffnung in den Kanal (8) eindringen kann, wodurch der Kanal (8) mit Umgebungsluft (9) gespült oder durchströmt ist, und dass in dem Flächenelement thermische Energie absorbiert wird, an den in der Leitung (4) geführten Wärmeträger (5) übertragen wird und darüber zur Wärmepumpe (12) abführbar ist, wobei die Leitung (4) außerhalb zumindest eines Kanals (8) angeordnet ist.

2. Umwandlungsvorrichtung nach Anspruch 1, **dadurch gekennzeichnet, dass** das Flächenelement (7) thermisch nicht isoliert ist.

3. Umwandlungsvorrichtung nach Anspruch 1 oder 2, **dadurch gekennzeichnet, dass** die Leitung (4) zumindest streckenweise in einem zwischen einem ersten Flächenelement (7A) und einem zweiten Flächenelement (7B) angeordneten Kanal (8) angeordnet ist.

4. Umwandlungsvorrichtung nach einem der Ansprüche 1 bis 3, **dadurch gekennzeichnet, dass** der zumindest eine Kanal (8; 8A, 8B) zumindest eine zur Umgebung der Vorrichtung führende Öffnung aufweist, wodurch zumindest das Flächenelement (7; 7A, 7B) mit der Umgebungsluft (9) umströmbar ist.

5. Umwandlungsvorrichtung nach einem der Ansprüche 1 bis 4, **dadurch gekennzeichnet, dass** das Flächenelement (7) aus einem Metall oder einer Metalllegierung, insbesondere aus Aluminium gebildet ist.

6. Umwandlungsvorrichtung nach einem der Ansprüche 1 bis 5, **dadurch gekennzeichnet, dass** die Leitung (4), in der der Wärmeträger (5) fluidisch geführt wird, aus einem Metall oder einer Metalllegierung, insbesondere aus Aluminium gebildet ist.

7. Umwandlungsvorrichtung nach einem der Ansprüche 1 bis 6, **dadurch gekennzeichnet, dass** die Leitung (4) so angeordnet ist, dass zwischen der Leitung (4) und dem Flächenelement (7) zumindest ein thermischer Kontakt (15) gebildet ist.

8. Umwandlungsvorrichtung nach Anspruch 7, **dadurch gekennzeichnet, dass** das Flächenelement (7) die Leitung (4) mechanisch trägt.

9. Umwandlungsvorrichtung nach einem der Ansprüche 1 bis 8, **dadurch gekennzeichnet, dass** das Flächenelement (7) des Solarthermie-Moduls (3) mit dem Rahmen (6) mechanisch verbunden, insbesondere lösbar verschraubt ist.

10. Umwandlungsvorrichtung nach einem der Ansprüche 1 bis 9, **dadurch gekennzeichnet, dass** an dem Photovoltaik-Modul (2) ein Speicher (10) für elektrische Energie elektrisch angeschlossen ist.

11. Umwandlungsvorrichtung nach Anspruch 10, **dadurch gekennzeichnet, dass** der Speicher geeignet ist, alternativ oder ergänzend zu einer Netzeinspeisung angeschlossen zu sein.

12. Umwandlungsvorrichtung nach einem der Ansprüche 1 bis 11, **dadurch gekennzeichnet, dass** an der Leitung (4) für den Wärmeträger (5) eine Pumpenleitung (11) fluidisch angeschlossen ist, über die der Wärmeträger (5) der Wärmepumpe (12) zugeführt wird.

13. Umwandlungsvorrichtung nach Anspruch 12, **dadurch gekennzeichnet, dass** die Pumpenleitung (11) so beschaffen ist, dass der Wärmeträger (5) in einen Wärmekreislauf (14) zur unmittelbaren Wärmeabgabe und/oder in einen Wärmespeicher zur Speicherung der thermischen Energie fluidisch gefördert wird.

14. Umwandlungsvorrichtung nach einem der Ansprüche 1 bis 13 **dadurch gekennzeichnet, dass** der Rahmen (6) auf und/oder an einem Gebäude befestigbar, insbesondere lösbar befestigt ist.

15. Ein- oder mehrteiliges Flächenelement (7) zum Übertragen thermischer Energie von Umgebungsluft (9) auf einen Wärmeträger (5), mit einer Umwandlungsvorrichtung nach einem der Ansprüche 1 bis 14,
**gekennzeichnet durch** zumindest eine auf dem Flächenelement oder zwischen Teilen (7A, 7B) des Flächenelementes (7) angeordnete Leitung (4), welche mit der Umgebungsluft (9) zumindest streckenweise umströmt wird, und **durch** einen thermischen Kontakt (15) zwischen dem Flächenelement (7) und der Leitung (4).

16. Flächenelement (7) nach Anspruch 15, **dadurch gekennzeichnet, dass** es aus Aluminium oder einer Aluminiumlegierung gebildet ist.

17. Nachrüstfähige Energieerzeugungsvorrichtung zur Erzeugung thermischer und/oder elektrischer Energie, die in einem Gebäude nutzbar ist, mit mehreren, untereinander elektrisch und/oder thermodynamisch gekoppelten Umwandlungsvorrichtungen nach einem der Ansprüche 1 bis 14, **gekennzeichnet**durch Befestigungsmittel zum nachträglichen Befestigen der Rahmen (6) der Umwandlungsvorrichtungen neben, an und/oder auf einem vorhandenen Gebäude,
durch fluidische Verbindungsmittel zum fluidischen Verbinden zumindest einer Leitung (4) mit einem thermodynamischen Verbraucher und/oder thermodynamischen Speicher,
durch elektrische Verbindungsmittel zum elektrischen Verbinden zumindest eines Photovoltaik-Moduls (2) mit einem elektrischen Verbraucher und/oder elektrischen Speicher, und
durch Verbindungsmittel zum elektrischen und/oder fluidischen Verbinden der gekoppelten Umwandlungsvorrichtungen untereinander.

18. Energieerzeugungsvorrichtung nach Anspruch 17, **dadurch gekennzeichnet, dass** der thermodynamische Verbraucher und/oder der elektrische Verbraucher zumindest eine Wärmepumpe (12) umfasst, die fluidisch mit zumindest einer Leitung (4) verbunden ist, und in der dem Wärmeträger (5) thermische Energie entziehbar ist, und durch die in dem Gebäude nutzbare thermische Energie bereitstellbar ist.

19. Verwendung einer Vorrichtung (1) zum Umwandeln von solarer Strahlungsenergie in elektrischen Strom und/oder in Wärme nach einem der Ansprüche 1 bis 14, zum Kühlen eines Gebäudes oder einer Einrichtung, **dadurch gekennzeichnet, dass** die Leitung (4) mit einer Wärme-Kraft-Maschine fluidisch verbunden ist, die so betrieben wird, dass dem Flächenelement (7) thermische Energie entzogen wird, wodurch das Flächenelement (7) und seine Umgebung kühlbar sind.

20. Verwendung einer Vorrichtung (1) zum Umwandeln von solarer Strahlungsenergie in elektrischen Strom und/oder in Wärme nach einem der Ansprüche 1 bis 14 zum Beheizen eines Gebäudes oder einer Einrichtung, **dadurch gekennzeichnet, dass** die Leitung (4) mit einer Kraft-Wärme-Maschine fluidisch verbunden ist, die so betrieben wird, dass das Flächenelement (7) mit thermischer Energie beaufschlagt wird, wodurch das Flächenelement (7) und seine Umgebung heizbar sind.

21. Verfahren zum Umwandeln von solarer Strahlungsenergie in elektrischen Strom und/oder in Wärme mit einer Umwandlungsvorrichtung (1) nach einem der Ansprüche 1 bis 14, bei dem die direkt eintreffende solare Strahlungsenergie in einem Photovoltaik-Modul (2) zumindest teilweise photovoltaisch in elektrischen Strom umgewandelt wird und bei dem die durch die Einwirkung der solaren Strahlungsenergie erzeugte Wärme solarthermisch genutzt wird, indem zumindest ein Teil der solar erzeugten Wärme absorbiert wird und auf einen in zumindest einer Leitung (4) fluidisch geführten Wärmeträger (5) übertragen wird, **dadurch gekennzeichnet, dass** die Absorption der solar erzeugten Wärme zumindest teilweise in einem mit der Leitung (4) in thermischem Kontakt stehenden Flächenelement (7) so erfolgt, dass die zu absorbierende Wärme zumindest teilweise einem zwischen dem Photovoltaik-Modul (2) und dem Flächenelement (7) angeordneten Kanal (8) entnommen wird, in dem Umgebungsluft (9) enthalten ist und/oder der von Umgebungsluft (9) durchströmt und/oder gespült wird, und dass mit zumindest einem Teil des photovoltaisch erzeugten elektrischen Stroms eine an der Leitung (4) angeschlossene Wärmepumpe (12) betrieben wird, in der die von dem Flächenelement (7) absorbierte und auf den Wärmeträger (5) übertragene thermische Energie auf ein höheres Temperaturniveau angehoben oder in elektrische Energie transformiert wird.

22. Verfahren nach Anspruch 21, **dadurch gekennzeichnet, dass** in einem oder mehreren Speichern (10) elektrische und/oder thermische Energie gespeichert wird, so dass die gespeicherte Energie bei Abwesenheit der Einwirkung solarer Strahlungsenergie dem Speicher entnommen wird.

## Claims

1. A conversion device for converting solar radiation energy into electric current and into heat, or solar radiation energy into electric current or into heat, comprising
a photovoltaic module (2) for the photovoltaic conversion of solar radiation energy into electric current,
a solar thermal module (3) for the absorption of thermal energy, which comprises a planar element (7) and at least one line (4) arranged thereon, wherein a heat transfer medium (5) can be conveyed fluidically in the at least one line (4) and can be fed to a pump (12), and
a frame (6), in which the photovoltaic module (2) and the solar thermal module (3) are arranged such that the solar radiation acts directly on the photovoltaic module (2), and that the solar thermal module (3) is located, relative to the propagation direction (z) of the solar radiation, essentially behind the photovoltaic module (2),
**characterised in that** at least one channel (8) is arranged between the photovoltaic module (2) and the planar element (7), in which channel ambient air (9) is present, from which or through which thermal energy is transferred to the planar element (7), wherein the channel (8) is open insofar as ambient air (9) can penetrate into the channel (8) through at least one opening arranged in the channel (8), as a result of which the channel (8) can be swept with ambient air (9) or the latter can flow through said channel, and that thermal energy is absorbed in the planar element, is transferred to heat transfer medium (5) conveyed in the line (4) and can be carried away via the latter to the heat pump (12), wherein the line (4) is arranged outside at least one channel (8).

2. The conversion device according to claim 1, **characterised in that** the planar element (7) is not thermally insulated.

3. The conversion device according to claim 1 or 2, **characterised in that** the line (4) is arranged at least in sections in a channel (8) arranged between a first planar element (7A) and a second planar element (7B).

4. The conversion device according to any one of claims 1 to 3, **characterised in that** the at least one channel (8; 8A, 8B) comprises at least one opening leading to the surroundings of the device, as a result of which at least the planar element (7; 7A, 7B) can be swept with ambient air (9).

5. The conversion device according to any one of claims 1 to 4, **characterised in that** the planar element (7) is made of a metal or a metal alloy, in particular of aluminium.

6. The conversion device according to any one of claims 1 to 5, **characterised in that** the line (4), in which the heat transfer medium (5) is conveyed fluidically, is made of a metal or a metal alloy, in particular of aluminium.

7. The conversion device according to any one of claims 1 to 6, **characterised in that** the line (4) is arranged such that at least one thermal contact (15) is created between the line (4) and the planar element (7).

8. The conversion device according to claim 7, **characterised in that** the planar element (7) carries the line (4) mechanically.

9. The conversion device according to any one of claims 1 to 8, **characterised in that** the planar element (7) of the solar thermal module (3) is connected mechanically to the frame (6), in particular screwed in a detachable manner.

10. The conversion device according to any one of claims 1 to 9, **characterised in that** a storage unit (10) for electrical energy is connected electrically to the photovoltaic module (2).

11. The conversion device according to claim 10, **characterised in that** the storage unit is suitable for being connected alternatively or additionally to a mains feed-in.

12. The conversion device according to any one of claims 1 to 11, **characterised in that** a pump line (11) is connected fluidically to the line (4) for the heat transfer medium (5), via which pump line the heat transfer medium (5) is fed to the heat pump (12).

13. The conversion device according to claim 12, **characterised in that** the pump line (11) is constituted such that the heat transfer medium (5) is conveyed fluidically into a thermal circuit (14) for direct heat release and/or into a thermal storage unit for the storage of thermal energy.

14. The conversion device according to any one of claims 1 to 13, **characterised in that** the frame (6) can be fastened, in particular fastened detachably, on and/or to a building.

15. A single-part or multi-part planar element (7) for transferring thermal energy from the ambient air (9) to a heat transfer medium (5), comprising a conversion device according to any one of claims 1 to 14, **characterised by** at least one line (4) arranged on the planar element or between parts (7A, 7B) of the planar element (7), which line is swept at least in sections with the ambient air (9), and by a thermal contact (15) between the planar element (7) and the line (4).

16. The planar element (7) according to claim 15, **characterised in that** it is made of aluminium or an aluminium alloy.

17. A retrofittable energy generation device for generating thermal and/or electrical energy which can be used in a building, comprising a plurality of conversion devices according to any one of claims 1 to 14 which are coupled to one another electrically and/or thermodynamically,
**characterised by** a fastening means for the subsequent fastening of the frame (6) of the conversion devices beside, to and/or on an existing building,
by fluidic connection means for the fluidic connection of at least one line (4) to a thermodynamic consumer and/or thermodynamic storage unit,
by electrical connection means for the electrical connection of at least one photovoltaic module (2) to an electrical consumer and/or an electrical storage unit, and
by connection means for the electrical and/or fluidic connection of the coupled conversion devices to one another.

18. The energy generation device according to claim 17, **characterised in that** the thermodynamic consumer and/or the electrical consumer comprises at least one heat pump (12), which is connected fluidically to at least one line (4), and in which thermal energy can be extracted from the heat transfer medium (5), and through which the thermal energy usable in the building can be made available.

19. Use of a device (1) for the conversion of solar radiation energy into electric current and/or into heat according to any one of claims 1 to 14, for cooling a building or a device, **characterised in that** the line (4) is connected fluidically to a heat engine, which is operated in such a way that thermal energy can be extracted from the planar element (7), as a result of which the planar element (7) and its surroundings can be cooled.

20. The use of a device (1) for the conversion of solar radiation energy into electric current and/or into heat according to any one of claims 1 to 14 for heating a building or a device, **characterised in that** the line (4) is connected fluidically to a heat engine, which is operated in such a way that the planar element (7) can be acted upon by thermal energy, as a result of which the planar element (7) and its surroundings can be heated.

21. A method for the conversion of solar radiation energy into electric current and/or into heat comprising a conversion device (1) according to any one of claims 1 to 14, wherein the directly incident solar radiation energy is converted in a photovoltaic module (2) at least partially photovoltaically into electric current and wherein the heat generated by the effect of the solar radiation energy is used in a solar-thermal manner, whereby at least a part of the solar-generated heat is absorbed and is transferred to a heat transfer medium (5) conveyed fluidically in at least one line (4), **characterised in that** the absorption of the solar-generated heat takes place at least partially in a planar element (7) in thermal contact with the line (4), such that the heat to be absorbed is extracted at least partially from a channel (8) arranged between the photovoltaic module (2) and the planar element (7), in which channel ambient air (9) is contained and/or through which channel ambient air (9) flows and/or which channel is swept with ambient air (9), and that a heat pump (12) connected to line (4) is operated with at least a part of the photovoltaically generated electric current, in which heat pump the thermal energy absorbed by the planar element (7) and transferred to the heat transfer medium (5) is raised to a higher temperature level or is transformed into electrical energy.

22. The method according to claim 21, **characterised in that** electrical and/or thermal energy is stored in one or more storage units (10), so that the stored energy is extracted from the storage unit in the absence of the effect of solar radiation energy.

## Revendications

1. Dispositif de transformation, destiné à transformer de l'énergie du rayonnement solaire en courant électrique et en chaleur ou de l'énergie du rayonnement solaire en courant électrique ou en chaleur, comprenant :
un module photovoltaïque (2) pour la transformation photovoltaïque d'énergie du rayonnement solaire en courant électrique,
un module thermique solaire (3) pour l'absorption d'énergie thermique, lequel est composé d'un élément plan (7) et d'au moins un conduit (4) placé sur celui-ci, un agent caloporteur (5) pouvant être alimenté fluidiquement dans l'au moins un conduit (4) et dans une pompe à chaleur (12) et
un cadre (6) dans lequel le module photovoltaïque (2) et le module thermique solaire (3) sont placés de telle sorte que le rayonnement solaire agisse directement sur le module photovoltaïque (2) et que le module thermique solaire (3) se trouve sensiblement à l'arrière du module photovoltaïque (2), en rapport à la direction de propagation (z) du rayonnement solaire,
**caractérisé en ce qu'**entre le module photovoltaïque (2) et l'élément plan (7) est placé au moins un canal (8) dans lequel se trouve de l'air ambiant (9) à partir duquel ou par lequel de l'énergie thermique est transférée sur l'élément plan (7), le canal (8) étant ouvert dans la mesure où de l'air ambiant (9) peut pénétrer dans le canal (8) par au moins un orifice placé dans le canal (9), suite à quoi, le canal (8) est rincé ou traversé par de l'air ambiant (9) et **en ce que** de l'énergie thermique est absorbée dans l'élément plan, transférée sur l'agent caloporteur (5) guidé dans le conduit (4) et par son intermédiaire, est évacuable vers la pompe à chaleur (12), le conduit (4) étant placé à l'extérieur d'au moins un canal (8).

2. Dispositif de transformation selon la revendication 1, **caractérisé en ce que** l'élément plan (7) n'est pas isolé thermiquement.

3. Dispositif de transformation selon la revendication 1 ou 2, **caractérisé en ce que** le conduit (4) est placé au moins par tronçons dans un canal (8) placé entre un premier élément plan (7A) et un deuxième élément plan (7B).

4. Dispositif de transformation selon l'une quelconque des revendications 1 à 3, **caractérisé en ce que** l'au moins un canal (8 ; 8A, 8B) comporte au moins un orifice menant vers l'environnement du dispositif, suite à quoi, l'au moins un élément plan (7 ; 7A, 7B) peut être entouré d'un courant d'air ambiant (9).

5. Dispositif de transformation selon l'une quelconque des revendications 1 à 4, **caractérisé en ce que** l'élément plan (7) est formé en un métal ou en un alliage métallique, notamment en aluminium.

6. Dispositif de transformation selon l'une quelconque des revendications 1 à 5, **caractérisé en ce que** le conduit (4) dans lequel l'agent caloporteur (5) est fluidiquement guidé est formé en un métal ou en un alliage métallique, notamment en aluminium.

7. Dispositif de transformation selon l'une quelconque des revendications 1 à 6, **caractérisé en ce que** le conduit (4) est placé de telle sorte qu'au moins un contact thermique (15) se créé entre le conduit (4) et l'élément plan (7).

8. Dispositif de transformation selon la revendication 7, **caractérisé en ce que** l'élément plan (7) porte mécaniquement le conduit (4).

9. Dispositif de transformation selon l'une quelconque des revendications 1 à 8, **caractérisé en ce que** l'élément plan (7) du module thermique solaire (3) est mécaniquement relié, notamment vissé de manière amovible avec le cadre (6).

10. Dispositif de transformation selon l'une quelconque des revendications 1 à 9, **caractérisé en ce que** sur le module photovoltaïque (2) est raccordé électriquement un accumulateur (10) d'énergie électrique.

11. Dispositif de transformation selon la revendication 10, **caractérisé en ce que** l'accumulateur est apte à être raccordé en variante ou en complément d'une alimentation réseau.

12. Dispositif de transformation selon l'une quelconque des revendications 1 à 11, **caractérisé en ce que** sur le conduit (4) pour l'agent caloporteur (5), un conduit de pompe (11) par l'intermédiaire duquel l'agent caloporteur (5) est alimenté vers la pompe à chaleur (12) est fluidiquement raccordé.

13. Dispositif de transformation selon la revendication 12, **caractérisé en ce que** le conduit de pompe (11) est créé de telle sorte que l'agent caloporteur (5) soit fluidiquement convoyé dans un circuit thermique (14) pour la restitution directe de chaleur et/ou dans un accumulateur thermique pour l'accumulation de l'énergie thermique.

14. Dispositif de transformation selon l'une quelconque des revendications 1 à 13, **caractérisé en ce que** le cadre (6) peut se fixer, notamment est fixé de manière amovible sur ou à un bâtiment.

15. Élément plan (7) en une ou en plusieurs parties, destiné à transférer de l'énergie thermique de l'air ambiant (9) sur un agent caloporteur (5), avec un dispositif de transformation selon l'une quelconque des revendications 1 à 14, **caractérisé par** au moins un conduit (4) placé sur l'élément plan ou entre des parties (7A, 7B) de l'élément plan (7), lequel est entouré au moins par tronçons d'un courant d'air ambiant (9) et par un contact thermique (15) entre l'élément plan (7) et le conduit (4).

16. Élément plan (7) selon la revendication 15, **caractérisé en ce qu'**il est formé en aluminium ou en un alliage d'aluminium.

17. Dispositif générateur d'énergie rééquipable, destiné à générer de l'énergie thermique et/ou électrique qui est utilisable dans un bâtiment, doté de plusieurs dispositifs de transformation selon l'une quelconque des revendications 1 à 14, couplés les uns aux autres de manière électrique et/ou thermodynamique, **caractérisé par** des moyens de fixation pour la fixation ultérieure des cadres (6) des dispositifs de transformation à côté, à et/ou sur un bâtiment existant,
par des moyens de liaison fluidique pour la liaison fluidique d'au moins un conduit (4) avec un consommateur thermodynamique et/ou un accumulateur thermodynamique,
par des moyens de liaison électrique pour la liaison électrique d'au moins un module photovoltaïque (2) avec un consommateur électrique et/ou un accumulateur électrique et
par des moyens de liaison pour la liaison électrique et/ou fluidique entre eux des dispositifs de transformation couplés.

18. Dispositif générateur d'énergie selon la revendication 17, **caractérisé en ce que** le consommateur thermodynamique et/ou le consommateur électrique comprend au moins une pompe à chaleur (12), qui est fluidiquement reliée avec au moins un conduit (4) et dans laquelle de l'énergie thermique peut être prélevée à l'agent caloporteur (5) et par laquelle l'énergie thermique utilisable dans le bâtiment peut être mise à disposition.

19. Utilisation d'un dispositif (1) destiné à transformer de l'énergie du rayonnement solaire en courant électrique et/ou en chaleur selon l'une quelconque des revendications 1 à 14, pour refroidir un bâtiment ou un système, **caractérisée en ce que** le conduit (4) est fluidiquement relié avec un groupe de cogénération qui fonctionne de telle sorte que de l'énergie thermique est prélevée à l'élément plan (7), suite à quoi, l'élément plan (7) et son environnement peuvent être refroidis.

20. Utilisation d'un dispositif (1) destiné à transformer de l'énergie du rayonnement solaire en courant électrique et/ou en chaleur selon l'une quelconque des revendications 1 à 14, pour chauffer un bâtiment ou un système, **caractérisée en ce que** le conduit (4) est fluidiquement relié avec un groupe de cogénération qui fonctionne de telle sorte que l'élément plan (7) est exposé à une énergie thermique, suite à quoi, l'élément plan (7) et son environnement peuvent être chauffés.

21. Procédé destiné à transformer de l'énergie du rayonnement solaire en courant électrique et/ou en chaleur, avec un dispositif de transformation (1) selon l'une quelconque des revendications 1 à 14, sur lequel l'énergie du rayonnement solaire directement incidente est transformée dans un module photovoltaïque (2) au moins en partie par moyen photovoltaïque en courant électrique et sur lequel la chaleur générée par l'effet de l'énergie du rayonnement solaire est utilisée de manière thermo-solaire, en ce qu'au moins une partie de la chaleur solaire générée est absorbée et transférée sur un agent caloporteur (5) fluidiquement guidé dans au moins un conduit (4), **caractérisé en ce que** l'absorption de l'énergie solaire générée s'effectue au moins en partie dans un élément plan (7) qui est en contact thermique avec le conduit (4) de sorte que la chaleur qui doit être absorbée soit prélevée au moins en partie dans un canal (8) placé entre le module photovoltaïque (2) et l'élément plan (7), dans lequel est contenu de l'air ambiant (9) et/ou qui est traversé et/ou rincé par de l'air ambient (9) et **en ce qu'**au moins une partie du courant électrique créé par moyen photovoltaïque fait fonctionner une pompe à chaleur (12) raccordée sur le conduit (4) dans laquelle l'énergie thermique absorbée par l'élément plan (7) et transférée à l'agent caloporteur (5) est relevée à un niveau de température plus élevé ou transformée en énergie électrique.

22. Procédé selon la revendication 21, **caractérisé en ce que** dans un ou dans plusieurs accumulateurs (10) est accumulée de l'énergie électrique et/ou thermique de sorte qu'en l'absence de l'effet de l'énergie du rayonnement solaire, l'énergie accumulée soit prélevée à l'accumulateur.
